# EUROPEAN PATENT APPLICATION

(11) **EP 1 911 612 A1**
(43) Date of publication of application: **16.04.2008**
(21) Application number: 06380266.4
(22) Date of filing: 13.10.2006
(51) Int. Cl.: B60G 7/00

(54) **Suspension arm for a motor vehicle wheel suspension**

(71) Applicant: Industria Auxiliar Alavesa, S.A. (Inauxa), 01470 Amurrio (Alava) (ES)
(72) Inventor: Morales Arnaez, Agustin, 48990 Getxo (ES)
(74) Representative: Carvajal y Urquijo, Isabel

(57) **Abstract**

The invention relates to a joining and stress transmitting element for suspension and steering mechanisms in automotive vehicles comprising: a central portion (1) in the form of a bar having a first end and a second end; a first end portion (2) at the first end such that the central portion (1) and the first end portion (2) form a single-piece joining element from a light material providing mechanical strength. The first end portion (2) forms a perform (1A) of a casing (1 C) of a connecting device, said perform (1A) being configured so that a definite shape of the casing (1 C) is defined by means of a forming operation on said preform (1A).

## Description

### Field of the Invention

The invention is included within the field of parts for automotive vehicles, specifically the parts related to joining and stress transmitting elements, especially for suspension, steering mechanisms and the like of automotive vehicles.

### Background of the Invention

The demands of the automotive field for the production of components manufactured with light alloys that can support high mechanical and heat requirements are gradually increasing and are the main driving force behind research in these materials. The research is currently focused on both the use of light materials with better properties and on high yield manufacturing processes which allow producing components with a high metallurgical quality.

In addition to lightness, high fatigue strength, a good strength/ductility ratio, resistance to impact and good weldability characteristics are required in the field of automotive suspension components.

It has been necessary to develop new aluminium alloys and composite materials as well as improve and/or develop casting processes (vacuum injection, liquid, semi-solid forging...) so that the aluminium alloys can meet these requirements.

The main lines of research in aluminium alloys are focused on the improvement of mechanical properties, attempting to prevent the subsequent application of a heat treatment, on the development of alloys working at higher temperatures and on the improvement of castability. The use of Al-Cu and Al-Mg and hypereutectic Al-Si alloys is directed to achieving these objectives.

The manufacture of suspension links is traditionally carried out by forging and machining the steel of the main body of the part and the subsequent integration of the ball joints or other type of connections either mechanically or by welding according to the demanded features.

According to the space available in the suspension system, as well as the demanded features and the vehicle range, these links can also be manufactured by plastic injection. These plastic links are of course much larger with the aim of being able to meet the demanded mechanical requirements and their arrangement in the suspension system is not always possible due to strict space restrictions.

There are some components of this type that are manufactured in aluminium, produced by casting techniques. They are aluminium components joined to steel ball joints. Nevertheless, the aluminium alloy used does not correspond to any standard alloy and due to the internal quality of the material, it is an injection casting process. The quality of this type of components is not good (porosity, shrinkage cavities and other inadmissible defects) and is far from reaching the level of features of conventional components.

Low-cost and viable welding processes have also been developed for mass productions allowing the manufacture of these components (suspension links) in aluminium and which have already been assembled in some high-range vehicles.

Although the production of these components in aluminium is not massive, the developments which are being carried out and the continuous demands for weight reduction by automobile manufacturers make it clear that in the near future the current production processes must be changed and light components differentiated either by cost, features or by both factors must be manufactured.

### Description of the Invention

The present invention includes structural aluminium alloys processed by means of casting processes for the substitution of the current suspension link concept carried out by machining and welding steel alloys. In addition, the new joining element can take into account the integration of the steel ball joint and other components forming the suspension system. Casting enables the integration of functions as well as new shapes and geometries.

Although the final selection of the materials is determined by the specifications of the selected component, there are two families of materials that can meet the requirements having at the same time great advantages as regards the weight reduction and design possibilities.

On one hand, cast aluminium alloys that can reach values close to ranges of ultimate tensile strength of 250-300 MPa, elastic limits of 200-250 MPa, moduli of elasticity of 18-23 GPa and with a high ductility (maximum elongation at break between 5-9%). Hypereutectic aluminium-silicon alloys or aluminium copper alloys of the AU5GT, Al-Zn type are included among this type of alloys.

On the other hand, there is another second family of materials for the manufacture of components with resistance to wear and to high temperature. They are composite materials with a metal matrix, i.e. composite materials based on aluminium alloys and ceramic reinforcements (TiB₂, SiC, Al₂O₃) in the form of 0.5-3 µm particles that can be processed by means of liquid forging, injection. Other magnesium alloys, semisolid state alloys and technologies can also be used.

The following table shows the differences between the state of the art and the present invention, i.e. between the materials and the manufacturing processes that logically result in a new product.

| | Current manufacture | Al alloy | Other alloys |
|---|---|---|---|
| Material | Steel | Hypereutectic Al-Si (AS9U3, AS12UNG), Al-Cu (AU5GT) alloys | Al-Si alloys reinforced with SiC, Al-TiB₂ particles, B₄C or Al₂O₃ reinforcement etc. Mg alloys |
| Process | Machining and welding | Casting by gravity or injection at high pressure | Liquid forging, casting by gravity, low pressure, injection at high pressure |

The combination of a suitable casting technique allowing a minimal number of finishing processes, together with the development of light materials designed *ex profeso* for this invention allows obtaining, among others, the advantages indicated below:
- reducing the weight of the component between 20-30%;
- improving its features as regards fatigue strength, corrosion and specific mechanical properties;
- new design improving the features of the component in service conditions;
- reducing the manufacturing costs by 10-20% upon substituting the current machining and welding operations with a casting process to obtain an almost end form of the element.

The present invention allows manufacturing the joining element from aluminium alloys, considering both the currently existing commercial alloys and the optimized new compositions for the application in question. Thus, the joining elements of the present invention manufactured in aluminium, are between 20-30% lighter than the current solutions in steel without decreasing, or even increasing the specific features (taking into account the total weight of the end component.

On the other hand, from the point of view of design and manufacture, new concepts for assembling the ball joints are included, also considering alternative materials to those currently considered which can either be installed as inserts in the casting process itself or installed afterwards in a minimal number of operations. The aim is to reduce the operations to be carried out for the manufacture of the complete part as much as possible and reduce the cost of the process.

An aluminium link would occupy a greater size than a conventional steel link; even so the advantages are evident: weight reductions of the order of at least between 20-30% with a much lower volume than that necessary for polymeric components, which allows its installation in a large number of automobile models, taking into account that the demand existing in the automotive market for this type of components is enormous.

The main innovations and the provided advantages are summarized below:
- New suspension link concept: weight reduction;
- Casting technology for the manufacture of the suspension link: new design possibilities, changes of section, cost reduction;
- New aluminium alloys for suspension elements: improvements in specific mechanical properties, increase in the service life of the component;
- Integration of the ball joint with the link in the casting step: cost reduction.

The present invention can also include specific equipment with a mechanism of rollers around the area to be trimmed. In this way, the aluminium part is pressed and moved against the spherical head of the ball joint. This operation which is carried out after the part has been demolded can also be carried out with a press, forming the edge of the head around the spherical head of the ball joint.

The manufacture of this type of components by casting instead of machining gives rise to manufacturing cost reduction even despite the fact that the cost of the raw material is higher. This is due to the fact that casting is a much more productive technique than machining in addition to the fact that, taking into account the considered process, the different elements of the part (ball joints, bearings, silentblocks and others) can be integrated in the part in the casting process itself, therefore the need for the currently used welding and assembling processes is eliminated.

Automobile manufacturers demand also a weight reduction in the structural components and the only way to meet the demands is to optimize the design and introduce new materials with higher specific properties.

The present invention develops a new concept of an automotive component in which the current manufacturing materials and processes are substituted with lighter materials and more competitive processes. The direct consequence of the two latter aspects is the improvement of an essential aspect for the society such as reduction of the total weight of the automobiles where the new components are incorporated. This reduction in the weight of the end component reduces the consumption of fuel and gas emission of the vehicles incorporating this product. On the other hand, the proposed new materials based on aluminium alloys can be recycled easily thereof they also contribute to the sustainability and environmental protection policies.

The manufactured element is a joining element comprising a simple, double or combined ball joint structure device, i.e. it has a ball joint in an end portion or in both.

In the joining element of the present invention, the head, i.e. a first end portion is a single body, in other words, without bushing and without lid, in an area for housing the sphere of a ball joint, thereby causing a direct ball joint-housing friction.

### Brief Description of the Drawings

A series of drawings is very briefly described below which aid in better understanding the invention and which are expressly related to an embodiment of said invention which is set forth as an illustrative and non-limiting example thereof.

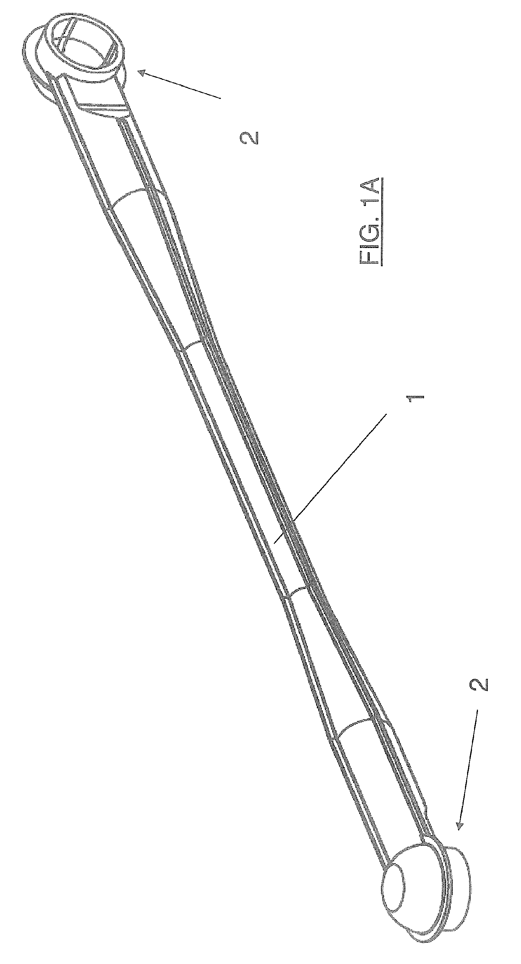

Figure 1A shows a perspective view of a joining element of the invention.

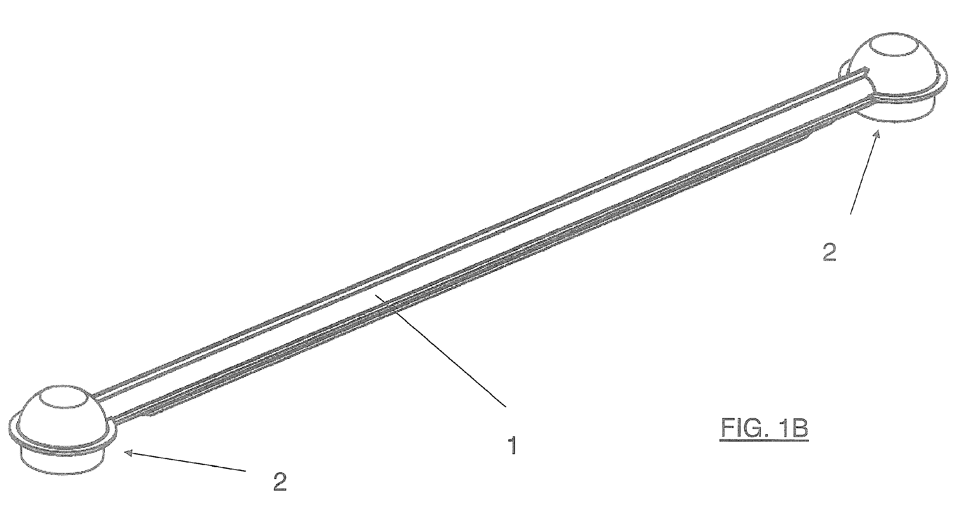

Figure 1B shows a perspective view of another joining element of the invention.

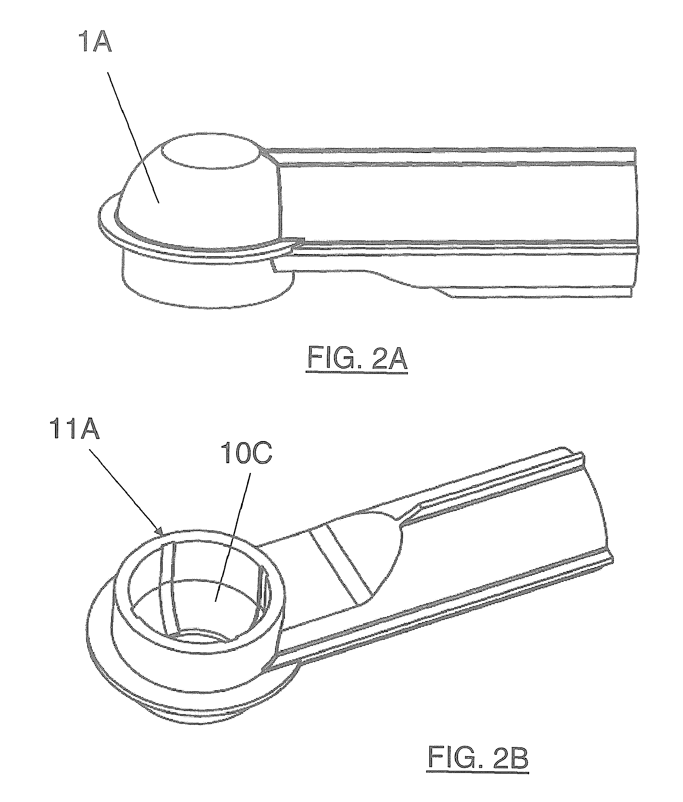

Figure 2A shows a perspective detail of an end of the joining element of the invention showing the preform from its convex side.
Figure 2B shows a perspective detail of an end of the joining element of the invention showing the preform from its concave side.
Figure 3A shows a perspective detail of an end of the joining element of the invention showing the already formed casing from its convex side.

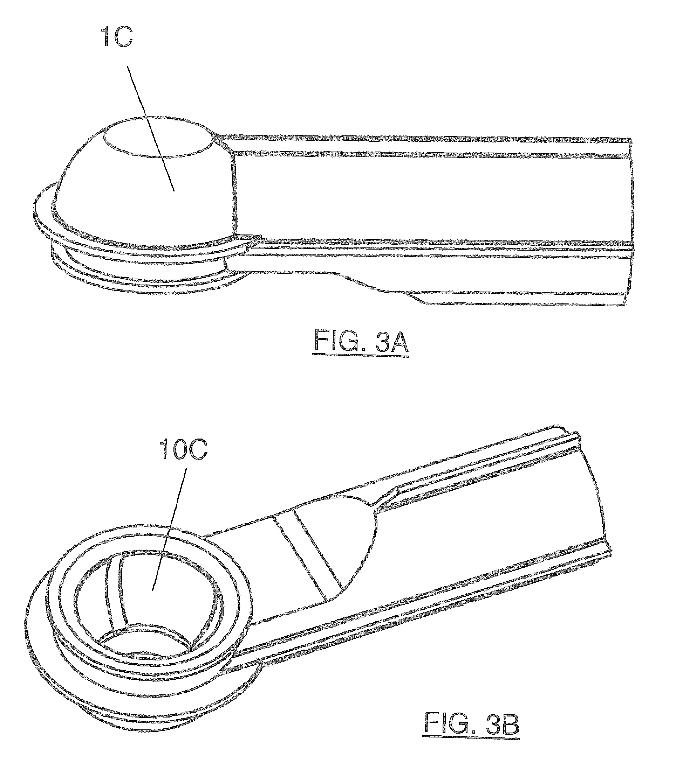

Figure 3B shows a perspective detail of an end of the joining element of the invention showing the already formed casing from its concave side.

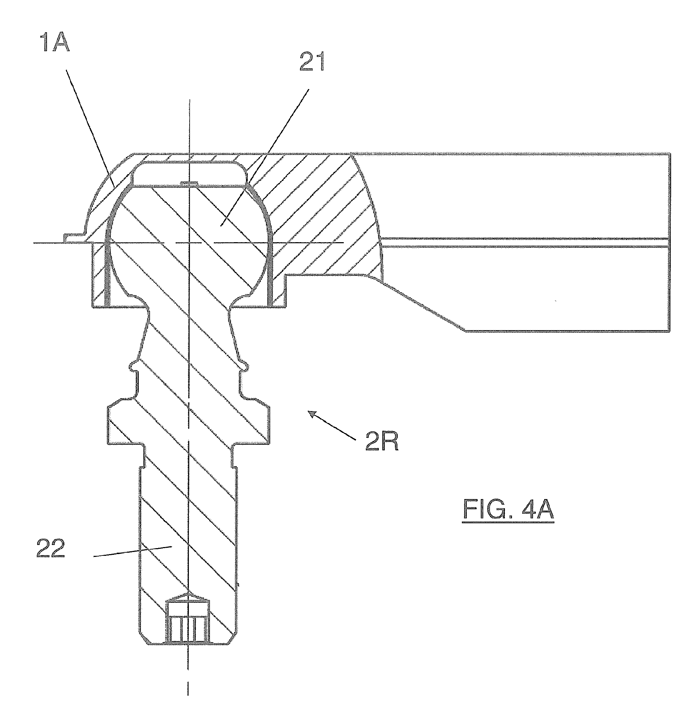

Figure 4A shows a section of an end of the joining element of the invention showing the preform containing a ball joint.

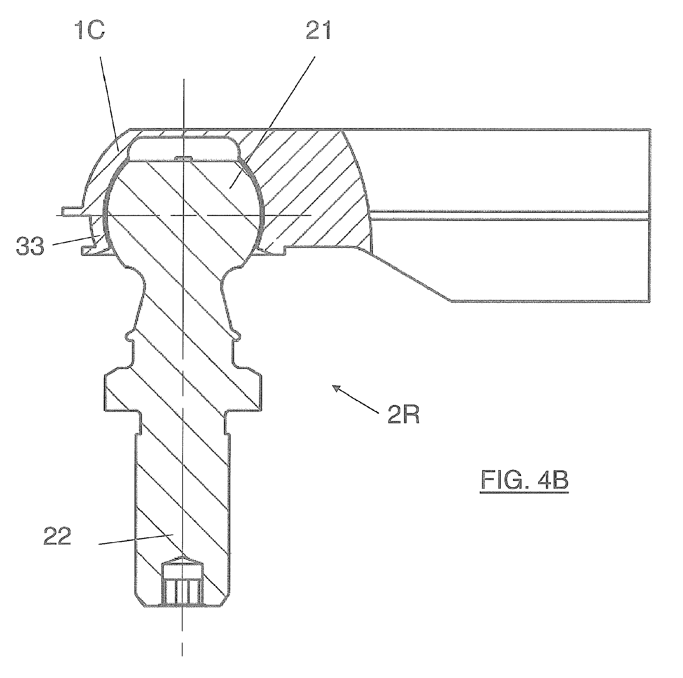

Figure 4B shows a section of an end of the joining element of the invention showing the already formed casing containing a ball joint.
Figure 5 shows a sectional view of the dust seal.

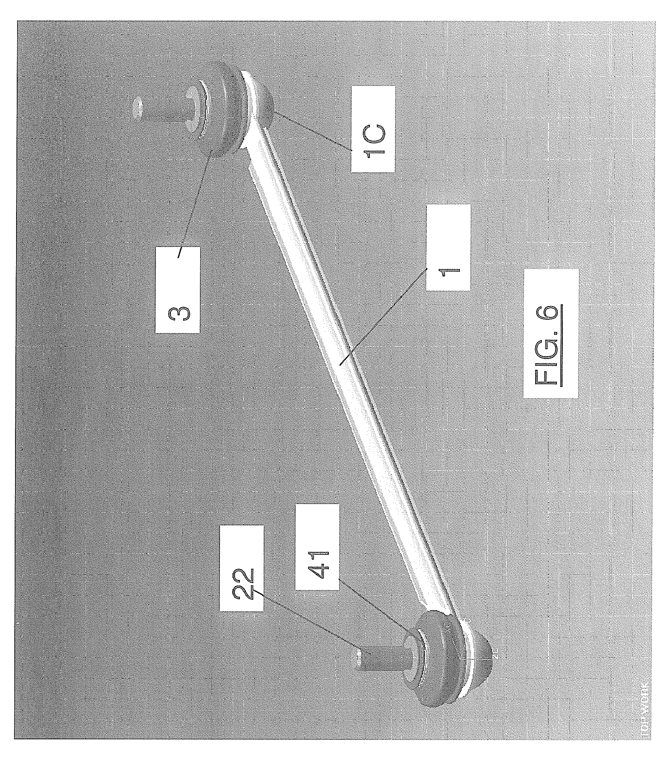

Figure 6 shows a perspective view of a joining element of the invention having a dust seal at each end.

### Description of a Preferred Embodiment of the Invention

A first embodiment of the invention relates to a joining element and stress transmitting element for the suspension and steering mechanisms of automotive vehicles comprising:
a central portion (1) in the form of a bar having a first end and a second end;
a first end portion (2) at the first end such that the central portion (1) and the first end portion (2) form a single-piece joining element from a light material providing mechanical strength;
characterized in that the first end portion (2) forms a perform (1A) of a casing (1C) of a connecting device, said perform (1A) being configured so that a definite shape of the casing (1C) is defined by means of a forming operation on said preform (1A).

By means of this configuration, the element of the invention makes the use of additional closing lids unnecessary. The parts known to date require said closing lids which, in addition to complicating the manufacturing process of the parts with the subsequent cost increase thereof, also make the tightness of the parts more difficult.

The forming process can comprise trimming a contour of the first end portion (2) so that the connecting device is retained in a housing (10C) of said first end portion (2).

In the joining element:
the connecting device can be a ball joint device comprising a ball joint (2R) comprising a substantially spherical first ball joint portion (21) and a second ball joint portion (22) which is rod-shaped;
the preform (1A) can be a cup defining:
   a housing (10C) in an inner wall of the casing (1C) for housing the first ball joint portion (21), said housing (10C) being configured to allow a sliding movement of the first ball joint portion (21) in said housing (10C);
   a closed cavity except for an opening (11A) configured to allow the introducing the first ball joint portion (21) in said housing (10C).

As indicated previously, the fact that the preform (1A) is cup-shaped prevents the use of auxiliary closing lids, which facilitates the manufacture of the parts and consequently reduces the production cost thereof. Likewise, since the cups do not incorporate additional elements, a tightness with greater guarantees is ensured than in the case of parts requiring closing lids. Thus, the opening (11A) on the head or first ball joint portion (21) is closed in the trimming process, passing from the preform (1A) to the casing (1 C) without using any additional element to the casing (1 C) itself and the ball joint (2R).

The joining element of the invention can further comprise a dust seal (3) to protect the ball joint device. In this case, the joining element of the invention can further comprise:
a first sealing ring (41) to secure a first end (31) of the dust seal (3) to the ball joint (2R).

The dust seal (3) can further comprise a plurality of annular grooves as a labyrinthic closure in a contact surface between the first end (31) and the ball joint (2R) to ensure tightness between the dust seal (3) and the ball joint (2R).

The joining element of the invention can also comprise securing means for securing a second end (32) of the dust seal (3), said securing means comprising:
a perimetric annular groove (33) in the casing (1 C);
a second sealing ring (42) to removably fix the second end (32) of the dust seal (3) to the casing (1 C);
   to:
   ensure the tightness between the casing (1 C) and the dust seal (3);
   ensure the anchoring of the dust seal (3) to the casing (1 C).

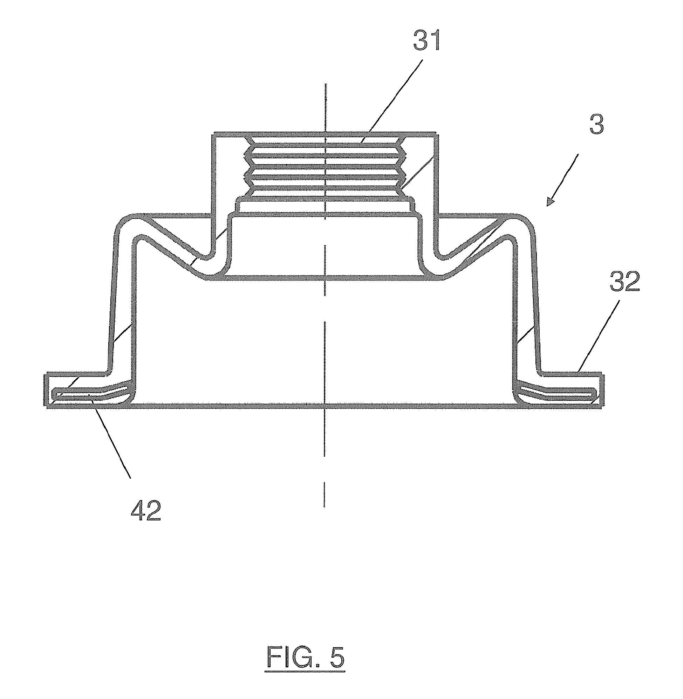

As can be seen in figure 5, the second sealing ring (42) can be encased in the dust seal (3).

In the joining element of the invention:
the second ball joint portion (22) can be made of steel;
the first ball joint portion (21) can be made of a material selected from:
   steel;
   thermosetting plastic;
   aluminium alloy;
   plastic;
and combinations thereof.

On one hand, the dust seal (3) can be made of an elastomeric material selected from:
natural rubber;
synthetic rubber;
plastic;
injectable polyurethane;
and combinations thereof.

On the other hand, the sealing rings (41, 42) can be of a material selected from:
steel;
stainless steel;
natural rubber;
synthetic rubber;
plastic;
polyurethane;
and combinations thereof.

The casing (1 C) can be made of a material selected from:
hypereutectic Al-Si alloy;
Al-Cu alloy;
Al-Si alloy reinforced with SiC, Al-TiB₂, B₄C, AL₂O₃ particles;
Mg alloy;
and combinations thereof. Both standard alloys and modified alloys, as needed, with Cu, Rh, Mn, Mg, Fe, pre-eutectic alloys, eutectic alloys and hypereutectic alloys can be used with respect to the Al-Si diagram.

The requirements of the suspension link are used as the basis for selecting the aluminium alloy-based materials. In principle there is already a list of materials that can be used in the manufacture of the joining element of the invention (hypereutectic Al-Si alloys such as AS12UNG, AS10G, AS9U3G and the like, although materials such as Duralcan F3S10S composite material or AM20 Magnesium alloys (foundry cast piece in sand and thermally treated T6, density 1.81 g/cm³, modulus of elasticity 44.8 GPa, maximum tensile strength 275 MPa, elastic limit 195 MPa and elongation 6%) Al-Zn or Al-Cu alloys (A204, A201 and the like) or aluminium alloys reinforced with titanium diboride TiB₂ or carbon tetraboride B₄C particles can also be used.

The casting process can comprise the high pressure injection or liquid forging in the case of needing higher mechanical properties. Other possibilities such as thixoforming or the low pressure can also be used if needed.

## Claims

1. A joining and stress transmitting element for suspension and steering mechanisms in automotive vehicles comprising:
a bar-shaped central portion (1) having a first end and a second end;
a first end portion (2) at the first end such that the central portion (1) and the first end portion (2) form a single-piece joining element from a light material providing mechanical strength;
**characterized in that** the first end portion (2) forms a pre-form (1A) of a casing (1C) of a connecting device, said pre-form (1A) being configured so that a definite shape of the casing (1 C) is defined by means of a forming operation on said preform (1 A).

2. The joining element according to claim 1 wherein the forming operation comprises trimming the contour of the first end portion (2) so that the connecting device is retained in a housing (10C) of said first end portion (2).

3. The joining element according to any of claims 1-2 wherein:
the connecting device is a ball joint device comprising a ball joint (2R) comprising a substantially spherical first ball joint portion (21) and a second ball joint portion (22) which is rod-shaped;
the preform (1A) is a cup defining:
a housing (10C) in an inner wall of the casing (1C) for housing the first ball joint portion (21), said housing (10C) being configured to allow a sliding movement of the first ball joint portion (21) in said housing (10C);
a closed cavity except for an opening (11A) configured to allow the first ball joint portion (21) be introduced in said housing (10C).

4. The joining element according to claim 3 further comprising:
a dust seal (3) to protect the ball joint device.

5. The joining element according to claim 4 further comprising:
a first sealing ring (41) to secure a first end (31) of the dust seal (3) to the ball joint (2R).

6. The joining element according to claim 5 wherein the dust seal (3) further comprises a plurality of annular grooves as a labyrinthic closure in a contact surface between the first end (31) and the ball joint (2R) to ensure tightness between the dust seal (3) and the ball joint (2R).

7. The joining element according to any of claims 4-6 further comprising securing means for securing a second end (32) of the dust seal (3), said securing means comprising:
a perimetric annular groove (33) in the casing (1 C);
a second sealing ring (42) to removably fix the second end (32) of the dust seal (3) to the casing (1 C);
to:
ensure tightness between the casing (1 C) and the dust seal (3);
ensure an anchoring of the dust seal (3) to the casing (1C).

8. The joining element according to any of claims 3-7 wherein:
the second ball joint portion (22) is made of steel;
the first ball joint portion (21) is made of a material selected from:
steel;
thermosetting plastic;
aluminium alloy;
plastic;
and combinations thereof.

9. The joining element according to any of claims 4-8 wherein the dust seal (3) is made of an elastomer material selected from:
natural rubber;
synthetic rubber;
plastic;
injectable polyurethane;
and combinations thereof.

10. The joining element according to claim 9 wherein the sealing rings (41, 42) are made of a material selected from:
steel;
stainless steel ;
natural rubber;
synthetic rubber;
plastic;
polyurethane;
and combinations thereof.

11. The joining element according to any of claims 1-10 wherein the light material is a material selected from:
hypereutectic Al-Si alloy;
Al-Cu alloy;
Al-Si alloy reinforced with SiC, Al-TiB₂, B₄C, AL₂O₃ particles;
Mg alloy;
and combinations thereof.
